# EUROPÄISCHE PATENTSCHRIFT

(11) **EP 0 786 968 B1**
(45) Veröffentlichungstag und Bekanntmachung des Hinweises auf die Patenterteilung: **03.03.1999**
(21) Anmeldenummer: 95935335.0
(22) Anmeldetag: 18.10.1995
(51) Int. Cl.: A61C 19/00

(54) **VORRICHTUNG ZUM ANMISCHEN EINER DENTALKERAMISCHEN MASSE**
DEVICE FOR MIXING A DENTAL CERAMIC COMPOSITION
DISPOSITIF SERVANT A MELANGER UNE COMPOSITION CERAMIQUE DENTAIRE

(30) Priorität: 18.10.1994 DE 9416738 U; 27.07.1995 DE 19527460
(43) Veröffentlichungstag der Anmeldung: 06.08.1997
(73) Patentinhaber: Fleischfresser, Klaus, 70325 Stuttgart (DE)
(72) Erfinder: Fleischfresser, Klaus, 70325 Stuttgart (DE)
(74) Vertreter: Schuster, Gregor, Dipl.-Ing.
(86) Internationale Anmeldenummer: DE9501445
(87) Internationale Veröffentlichungsnummer: WO9611646

(56) Entgegenhaltungen:
- DE-A- 3 015 410
- DE-U- 9 311 924

## Beschreibung

### Stand der Technik

Die Erfindung geht aus von einer Vorrichtung zum Anmischen einer dentalkeramischen Hasse nach der Gattung des Hauptanspruchs. Derartige Vorrichtungen werden verwendet. um die zur Herstellung von beispielsweise keramischen Kronen oder Brücken notwendige dentalkeramische Masse aus zwei Komponenten anzurühren. Die beiden Komponenten Wasser oder eine überwiegend aus Wasser bestehende Modilierflüssigkeit sowie ein Keramikpulver werden mit einem Pinsel oder mit einem Spachtel auf einer Anmischplatte vermischt, um anschließend auf ein Metallgerüst aufgetragen zu werden, welches in der Form dem herzustellenden Teil (beispielsweise Krone oder Brücke) entspricht und um schließlich gebrannt zu werden.

Bekannte Vorrichtungen sind mit einer Anmischplatte aus Glas. Schaummasse oder porösem Stein ausgestattet. Als nachteilig erweist sich bei der Verwendung von Anmischplatten aus Glas. daß die dentalkeramische Masse bereits kurze Zeit nach dem Vermischen austrocknet und hart wird. Um die Masse weiterverarbeiten zu können, muß sie mit destilliertem Wasser mehrfach befeuchtet werden, bis der Modelliervorgang abgeschlossen ist. Durch das Befeuchten kann die Masse mit Flüssigkeit übersättigt werden. Dagegen kommt es bei nicht ausreichender Befeuchtung zu Rißbildung beim Brennen der dentalkeramischen Masse. Überdies gestaltet das ständige Befeuchten die Bearbeitung der dentalkeramischen Masse zeitaufwendig und umständlich.

Bei einem bekannten Behälter zum Aufbewahren von feuchten keramischen Massen (DE-A-30 15 410) sind abdeckbare Mulden vorhanden, in welchen die dentalkeramischen Massen entsprechend gelagert werden.

Bei einer bekannten gattungsgemäßen Anmischplatte (DE-U-93 11 924) wird die dentalkeramische Masse auf einem Fasergewebe angemischt. wobei dieses Gewebe auf einer aus Keramikmaterial bestehenden Anmischplatte angeordnet ist. Nachteil einer solchen Vorrichtung ist. daß die Anmischplatte schaumartig bzw. porös ist. daß also kleinste in der Anmischflüssigkeit vorhandene Partikel die feinen Poren des Materials der Anmischplatte verstopfen können und sich sogar durch eine Reinigung der Platte nicht mehr entfernen lassen. Nach einer gewissen Zeit ist unvermeidlich eine so große Zahl von Poren verstopft, daß die Anmischplatte nicht mehr zu gebrauchen ist und durch eine neue ersetzt werden muß.

### Die Erfindung und ihre Vorteile

Demgegenüber hat die erfindungsgemäße Vorrichtung zum Anmischen einer dentalkeramischen Masse den Vorteil. daß die Anmischplatte aus einem keramischen Material besteht. welches eine Vielzahl von parallel verlaufenden Kanälen aufweist. Die Anmischplatte ist von einem Gehäuse umgeben, in das die Anmischflüssigkeit eingefüllt werden kann. Durch Kapillarkräfte steigt die Anmischflüssigkeit in den Kanälen auf und gelangt so zu der keramischen Komponente, die auf die Oberfläche der Anmischplatte aufgebracht wird. Das Keramikpulver nimmt gerade so viel Flüssigkeit auf, wie zum Ansetzen der keramischen Masse notwendig ist. Eine Übersättigung mit Flüssigkeit findet nicht statt.

Vorteilhafterweise behält die keramische Masse die für das Modellieren notwendige Konsistenz über einen längeren Zeitraum hinweg bei, da die verdunstete Flüssigkeit durch die in den Kanälen aufsteigende Anmischflüssigkeit ersetzt wird. Das Austrocknen der keramischen Masse kann selbst bei längerem Verbleib auf der Anmischplatte ausgeschlossen werden.

Das mechanische Mischen von Keramikpulver und Anmischflüssigkeit entfällt. da sich das keramische Pulver selbst mit der Anmischflüssigkeit anreichert. Die keramische Masse erhält hierbei eine dichte Konsistenz, was sich vorteilhaft auf die Beschaffenheit des Materials des abschließend bearbeiteten Teils sowie auf seine Farbe auswirkt.

Der Durchmesser der Kanäle ist groß gegenüber der Körnchengröße des Keramikpulvers, gegenüber Staubpartikeln und gegenüber den sich in der Anmischflüssigkeit befindlichen Partikeln. Dank des relativ großen Kanaldurchmessers kann ausgeschlossen werden. daß die Kanäle durch Staubpartikel, Verunreinigungen oder durch Keramikpulver verstopft werden. Die Anmischplatte kann mit Wasser oder bei starker Verunreinigung mit Hilfe eines Dampfstrahlers gereinigt werden. Durch Erhitzen in einem Ofen auf Temperaturen bis über 1000°C werden Bakterien und Keime abgetötet und die Platte somit desinfiziert.

Vorteilhafterweise lassen sich auf der erfindungsgemäßen Anmischplatte kleinste Mengen der keramischen Masse ansetzen. Überdies wird weniger Keramikpulver und Weniger Anmischflüssigkeit benötigt, als bei Verwendung bekannter Platten, so daß ein rationelles Arbeiten ermöglicht wird und Kosten gespart werden können.

Vorteilhafterweise besteht das Gehäuse für die Anmischplatte aus einem Behälter und einem vom Behälter abnehmbaren oder um eine am Behälter angeordnete Achse schwenkbaren Deckel. Der Behälter umschließt die Anmischplatte seitlich und von unten, während der Deckel bei geschlossenem Gehäuse die Anmischplatte von oben abdeckt. Dieses Gehäuse dient einerseits als Reservoir für die Anmischflüssigkeit, weshalb insbesondere der Behälter dicht sein muß. Zum anderen schützt das Gehäuse die Anmischplatte sowie die sich auf der Anmischplatte befindlichen keramischen Massen vor Verunreinigungen und mechanischen Belastungen.

Nach einer vorteilhaften Ausgestaltung der Erfindung weisen die Kanäle einen quadratischen Querschnitt auf.

Nach einer weiteren vorteilhaften Ausgestaltung der Erfindung weist die Dicke der Zwischenwände zwischen den Kanälen bezogen auf den Kanalquerschnitt eine geringe Ausdehnung auf.

Nach einer weiteren vorteilhaften Ausgestaltung der Erfindung besteht das Gehäuse aus Kunststoff. Kunststoff hat gegenüber anderen Materialien den Vorteil, daß er ein geringes Gewicht aufweist und einfach, sowie kostengünstig herzustellen ist.

Nach einer weiteren vorteilhaften Ausgestaltung der Erfindung besteht das Gehäuse aus Glas.

Nach einer weiteren vorteilhaften Ausgestaltung der Erfindung ist auf die Anmischplatte ein Filter auflegbar. Hierzu ist die Oberfläche der Anmischplatte vollkommen plan ausgebildet. Durch Verwenden eines Filters wird unter anderem verhindert, daß das Keramikpulver in die Kanäle eindringt. Das Keramikpulver wird direkt auf das Filter aufgebracht. Das Filter verhindert einerseits, daß Keramikpulverpartikel in die Kanäle der Anmischplatte eindringen können, andererseits reguliert es den Feuchtigkeitsgehalt an der Oberfläche der Anmischplatte.

Nach einer weiteren vorteilhaften Ausgestaltung der Erfindung besteht das Filter aus Papier. Papierfilter sind billig und können nach ihrer Verwendung ausgetauscht werden.

Nach einer weiteren vorteilhaften Ausgestaltung der Erfindung besteht das Filter aus einem Textilgewebe. Beispielsweise aus einem Baumwollgewebe oder aus Rohseide. Textilfilter können gereinigt werden und nach ihrer Reinigung wiederverwendet werden. Zur Reinigung genügt das Auswaschen unter fließendem Wasser.

Nach einer weiteren vorteilhaften Ausgestaltung der Erfindung ist zwischen Filter und Anmischplatte ein weiteres Filter angeordnet, auf welchem Markierungen für die Verteilung der Masse vorhanden sind. Nach Beendigung der Arbeit kann das obere Filter weggeworfen werden und das darunter liegende Filter nach Trocknen zur Akte genommen werden und Erforderlichenfalls wiederverwendet werden.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in der Zeichnung dargestellt und wird im folgenden näher beschrieben. Es zeigen:
- Fig. 1: Querschnitt durch eine erfindungsgemäße Vorrichtung,
- Fig. 2: Ausschnitt aus einer erfindungsgemäßen Anmischplatte in einer Ansicht von oben.

### Beschreibung des Ausführungsbeispiels

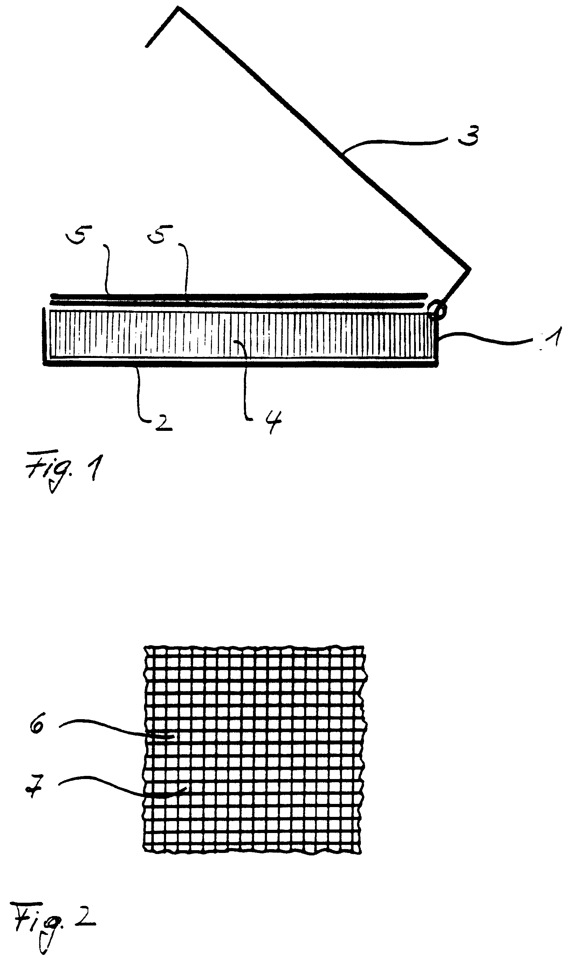

In Fig. 1 ist eine erfindungsgemäße Vorrichtung zum Anmischen einer dentalkeramischen Masse dargestellt. Das rechteckige Gehäuse 1 besteht aus einem Behälter 2 und einen um eine Achse schwenkbaren Deckel 3. Die Form des Gehäuses kann auch rund sein. Im Behälter 2 liegt die Anmischplatte 4, welche von oben durch ein Filter 5 abgedeckt wird. Es können auch wie in dem dargestellten Fall mehrere, beispielsweise zwei Filter übereinandergelegt sein, wobei auf dem unteren Filter mit Bleistift markiert werden kann, wo welche Massen auf dem oberen Filter zu liegen kommen sollen. Zum Anmischen einer dentalkeramischen Masse wird zunächst die Anmischflüssigkeit, beispielsweise demineralisiertes Wasser in den Behälter 2 gegeben. Die Flüssigkeit steigt in den Kanälen der Anmischplatte 4 auf, so daß nach einiger Zeit das im Behälter verbleibende Restwasser abgeschüttet werden kann. Anschließend wird das Filter 5 auf die Anmischplatte 4 gelegt und darauf das Keramikpulver mit Hilfe eines Spachtels oder Pinsels aufgebracht. Die in den Kanälen aufsteigende Flüssigkeit zieht in das Keramikpulver ein, so daß nach einiger Zeit eine modellierfähige keramische Masse vorliegt.

Fig. 2 zeigt einen Ausschnitt aus einer Anmischplatte in einer Ansicht von oben. Erkennbar sind die Öffnungen 6 der Kanäle 7. Die Zwischenwände zwischen den Kanälen sind relativ dünn, um die Anzahl der Kanäle auf einer vorgegebenen Grundfläche möglichst groß zu halten. Der Durchmesser der Kanäle ist groß gegenüber den Partikeln des Keramikpulvers und gegenüber Staubpartikeln.

### Bezugszahlenliste

- 1: Gehäuse
- 2: Behälter
- 3: Deckel
- 4: Anmischplatte
- 5: Filter
- 6: Öffnung
- 7: Kanal

## Patentansprüche

1. Vorrichtung zum Anmischen einer dentalkeramischen Masse
- mit einer Anmischplatte (4), auf die die Komponenten zur Bildung der dentalkeramischen Masse aufgebracht und miteinander vermischt werden
- mit einem die Anmischplatte zumindest teilweise umgebenden Gehäuse (1), wobei das Gehäuse (1) aus einem die Anmischplatte (4) seitlich und von unten umschließenden Behälter (2), und die Anmischplatte (4) aus einem keramischen Material besteht, wobei die Anmischplatte (4) in dem mit der dentalkeramischen Masse in Kontakt kommenden Anmischbereich eine Vielzahl von dicht nebeneinander angeordneten durchgehend offenen Kanälen (7) aufweist, die von der Unterseite bis zur Oberseite der Anmischplatte (4) reichen und an der Unter- und Oberseite der Anmischplatte (4) offen sind,
dadurch gekennzeichnet,
- daß die Kanäle (7) zumindest annähernd vertikal zur Unter- und/oder Oberseite der Anmischplatte verlaufen und parallel zueinander angeordnet sind, und
- daß der Behälter vom einem abnehmbaren oder um eine am Behälter angeordnete Achse schwenkbaren Deckel (3), welcher bei geschlossenem Gehäuse (1) die Anmischplatte (4) von oben abdeckt, abdeckbar ist.

2. Vorrichtung zum Anmischen einer dentalkeramischen Masse nach Anspruch 1, dadurch gekennzeichnet, daß die Kanäle einen quadratischen Querschnitt aufweisen.

3. Vorrichtung zum Anmischen einer dentalkeramischen Masse nach Anspruch 1 und 2, dadurch gekennzeichnet` daß die Dicke der Zwischenwände zwischen den Kanälen bezogen auf den Kanalquerschnitt eine geringe Ausdehnung aufweisen.

4. Vorrichtung zum Anmischen einer dentalkeramischen Masse nach Anspruch 1 bis 3, dadurch gekennzeichnet, daß das Gehäuse (1) aus Kunststoff besteht.

5. Vorrichtung zum Anmischen einer dentalkeramischen Masse nach Anspruch 1 bis 3 dadurch gekennzeichnet, daß das Gehäuse (1) aus Glas besteht.

6. Vorrichtung zum Anmischen einer dentalkeramischen Masse nach einem der vorhergehenden Ansprüche, dadurch gekennzeichnet daß auf die Anmischplatte (4) ein Filter (5) auflegbar ist.

7. Vorrichtung zum Anmischen einer dentalkeramischen Masse nach Anspruch 6, dadurch gekennzeichnet daß das Filter (5) aus Papier besteht.

8. Vorrichtung zum Anmischen einer dentalkeramischen Masse nach Anspruch 6, dadurch gekennzeichnet, daß das Filter (5) aus einem Textilgewebe besteht.

9. Vorrichtung nach einem der Ansprüche 6 bis 8, dadurch gekennzeichnet, daß zwischen Filter (5) und Anmischplatte (4) ein weiteres Filter (5) angeordnet ist, auf welchem Markierungen für die Verteilung der Masse vorhanden sind.

## Claims

1. Device for mixing a ceramic dental composition
- with a mixing plate (4) upon which the components for forming the ceramic dental composition are brought and mixed with each other,
- with a housing (1) at least partially surrounding the mixing plate, wherein the housing (1) comprises a container (2) surrounding the mixing plate (4) at a side and at a bottom thereof, the mixing plate (4) made from a ceramic material, wherein the mixing plate (4) has a plurality of open through-channels (7) at a mixing region coming into contact with the ceramic dental composition, which are disposed in close proximity to each other, which extend from the lower side up to the upper side of the mixing plate (4), and which are open at the lower and upper sides of the mixing plate (4),
characterized in that,
the channels (7) extend at least approximately vertically with respect to the lower and/or upper side of the mixing plate and are disposed parallel to each other, and
the container can be covered by a lid (3) which is removable or which can pivot about an axis disposed on the container and which covers the mixing plate (4) from above when the housing (1) is closed.

2. Device for mixing a ceramic dental composition according to claim 1, characterized in that the channels have a square cross section.

3. Device for mixing a ceramic dental composition according to claims 1 and 2, characterized in that the thickness of the intermediate walls between the channels has a dimension less than the cross section of the channel.

4. Device for mixing a ceramic dental composition according to claims 1 through 3, characterized in that the housing (1) is made from plastic.

5. Device for mixing a ceramic dental composition according to claim 1 through 3, characterized in that the housing (1) is made from glass.

6. Device for mixing a ceramic dental composition according to any one of the preceding claims, characterized in that a filter (5) can be placed onto the mixing plate (4).

7. Device for mixing a ceramic dental composition according to claim 6, characterized in that the filter (5) is made from paper.

8. Device for mixing a ceramic dental composition according to claim 6, characterized in that the filter (5) is made from a textile weave.

9. Device according to any one of the claims 6 through 8, characterized in that an additional filter (5) is disposed between the filter (5) and the mixing plate (4) on which markings are provided for distribution of the composition.

## Revendications

1. Dispositif servant à mélanger une composition céramique dentaire
- avec une plaque à mélanger (4), sur laquelle on place et mélange les composants pour former la composition céramique dentaire
- avec un carter (1) entourant au moins partiellement la plaque à mélanger, le carter (1) étant formé par un récipient (2) renfermant latéralement et par le bas la plaque à mélanger (4), la plaque à mélanger (4) étant faite d'un matériau céramique, et la plaque à mélanger (4) présentant dans la zone de mixion rentrant en contact avec la composition céramique dentaire une multitude de canaux (7) totalement ouverts et disposés étroitement les uns à côté des autres, qui vont depuis le côté inférieur jusqu'au côté supérieur de la plaque à mélanger (4) et qui sont ouverts sur les côtés inférieur et supérieur de la plaque à mélanger (4),
caractérisé par le fait
- que les canaux (7) ont une orientation au moins à peu près verticale par rapport au côté inférieur et/ou supérieur de la plaque à mélanger et qu'ils sont disposés parallèlement les uns par rapport aux autres, et
- que le récipient peut être recouvert par un couvercle (3) qui peut être retiré ou qui est pivotable autour d'un axe disposé sur le récipient et qui, lorsque le carter (1) est fermé, recouvre la plaque à mélanger (4) par le haut.

2. Dispositif servant à mélanger une composition céramique dentaire selon la revendication 1, caractérisé par le fait que les canaux ont une coupe transversale carrée.

3. Dispositif servant à mélanger une composition céramique dentaire selon les revendications 1 et 2, caractérisé par le fait que l'épaisseur des cloisons entre les canaux, par rapport à la coupe transversale d'un canal, est de faible étendue.

4. Dispositif servant à mélanger une composition céramique dentaire selon les revendications 1 à 3, caractérisé par le fait que le carter (1) est en matière plastique.

5. Dispositif servant à mélanger une composition céramique dentaire selon les revendications 1 à 3, caractérisé par le fait que le carter (1) est en verre.

6. Dispositif servant à mélanger une composition céramique dentaire selon l'une des revendications précédentes, caractérisé par le fait qu'un filtre (5) peut être posé sur la plaque à mélanger (4).

7. Dispositif servant à mélanger une composition céramique dentaire selon la revendication 6, caractérisé par le fait que le filtre (5) est en papier.

8. Dispositif servant à mélanger une composition céramique dentaire selon la revendication 6, caractérisé par le fait que le filtre (5) est en tissu textile.

9. Dispositif selon l'une des revendications 6 à 8, caractérisé par le fait qu'entre le filtre (5) et la plaque à mélanger (4), il y a un autre filtre (5), sur lequel il y a des marques pour répartir la composition.
